# FASCICULE DE BREVET EUROPEEN

(11) **EP 0 711 392 B1**
(45) Date de publication et mention de la délivrance du brevet: **17.06.1998**
(21) Numéro de dépôt: 94922285.5
(22) Date de dépôt: 21.07.1994
(51) Int. Cl.: F16L 58/04

(54) **ELEMENT DE TUYAUTERIE POUR CANALISATION, CANALISATION CORRESPONDANTE, ET PROCEDE DE FABRICATION D'UN TEL ELEMENT DE TUYAUTERIE**
ROHRELEMENT FÜR EINE ROHRLEITUNG, ENTSPRECHENDE ROHRLEITUNG, UND HERSTELLUNGSVERFAHREN EINES SOLCHEN ROHRELEMENTES
PIPE ELEMENT FOR A PIPE RUN, CORRESPONDING PIPE RUN AND MANUFACTURE METHOD OF SUCH A PIPE ELEMENT

(30) Priorité: 28.07.1993 FR 9309303
(43) Date de publication de la demande: 15.05.1996
(73) Titulaire: PONT-A-MOUSSON S.A., 54000 Nancy (FR)
(72) Inventeur: PEDEUTOUR, Jean-Marc, F-54700 Blénod-lès-Pont-à-Mousson (FR); NOUAIL, Gérard, F-54700 Metz (FR); BELLO, Jean, F-54380 Gezoncourt (FR); BELLOCCI, Rio, F-54000 Pont-à-Mousson (FR)
(74) Mandataire: Puit, Thierry
(86) Numéro de dépôt international: FR9400911
(87) Numéro de publication internationale: WO9504239

(56) Documents cités:
- EP-A- 0 178 404
- FR-A- 2 347 604
- US-A- 3 584 655
- US-A- 4 853 297

## Description

La présente invention est relative à la protection contre la corrosion des canalisations constituées d'éléments de tuyauterie à base de fer, notamment en fonte. Par "éléments de tuyauterie", on entend les tuyaux ainsi que les divers accessoires tels que les coudes, les raccords, etc... .

L'invention s'applique principalement aux canalisations enterrées, mais peut éventuellement être également utilisée dans le cas de canalisations aériennes.

La corrosion par les sols des métaux ferreux est un phénomène d'une nature différente de la corrosion atmosphérique et consiste, pour l'essentiel, en la création de zones d'oxydation électriquement associées à des zones de réduction pouvant être situées à une certaine distance.

Il se produit donc des détériorations localisées et par conséquent importantes du métal ferreux.

La protection anti-corrosion des éléments de tuyauterie enterrés présente ainsi une difficulté particulière, d'autant plus que les terrains sont hétérogènes et de natures très diverses, que les éléments de tuyauterie, suivant leur utilisation, véhiculent des fluides à des températures différentes, modifiant les conditions de corrosion, et que la manutention des éléments de tuyauteries destinés à être enterrés conduit fréquemment à blesser en divers emplacements leur surface extérieure.

Une tuyauterie avec un revêtement contre la corrosion comprenant notamment une couche de zinc est connue par exemple du document EP-A-0 178 404.

L'invention a pour but de fournir une technique de revêtement d'un élément de tuyauterie, notamment enterrée, à base de fer qui, avec un coût acceptable, assure une bonne protection contre la corrosion quelle que soit la destination de la canalisation, notamment en adduction d'eau et en assainissement, et dans la grande majorité des terrains.

A cet effet, l'invention a pour objet un élément de tuyauterie à base de fer, notamment en fonte, notamment pour canalisation enterrée, pourvu d'un revêtement extérieur comprenant une première couche de zinc, caractérisé en ce qu'il comprend en outre sur cette première couche,
- une seconde couche, poreuse, d'alliage zinc/aluminium contenant 5 à 55 % d'aluminium ; et, sur cette deuxième couche,
- une troisième couche, poreuse, dite bouche-pores, comprenant un liant organique, notamment une peinture à l'eau, un vernis de bitume ou une résine époxydique.

L'élément de tuyauterie peut comporter une ou plusieurs des caractéristiques suivantes :
- La première couche est poreuse ;
- La première couche est prévue dans une quantité d'au moins 130 g/m², notamment d'au moins 200 g/m²;
- La couche d'alliage est prévue dans une quantité d'au moins 130 g/m², notamment d'au moins 150 g/m²;
- La couche bouche-pores a une épaisseur comprise entre 80 et 150 µm.

L'invention a également pour objets :
- une canalisation, notamment enterrée, constituée d'éléments de tuyauterie tels que définis ci-dessus ; et
- un procédé de réalisation de la protection d'un élément de tuyauterie à base de fer, notamment en fonte, contre la corrosion, notamment par les sols, comprenant les étapes suivantes :
   a) dépôt, notamment par métallisation à l'arc d'une première couche de zinc.
   b) dépôt par métallisation à l'arc d'une seconde couche d'alliage zinc/aluminium, contenant 5 à 55 % d'aluminium ; puis
   c) dépôt d'une troisième couche, poreuse, dite bouche-pores, comprenant un liant organique, notamment une peinture à l'eau, un vernis de bitume ou une résine époxydique.

On fournira maintenant un exemple de mise en oeuvre de l'invention, appliqué à un élément de tuyauterie d'adduction d'eau ou d'assainissement en fonte ductile.

Dans cet exemple, le revêtement défini plus haut est appliqué en trois étapes sur de la fonte prise après passage au four de traitement thermique, donc possédant une peau constituée d'oxydes de fer.

Dans une première étape, on dépose par métallisation à l'arc électrique une première couche de zinc.

Puis une seconde couche, constituée d'alliage zinc/aluminium, est déposée par métallisation à l'arc électrique sur la première couche.

Enfin, on dépose par pulvérisation la couche de finition, dite bouche-pores, comprenant un liant organique, notamment une peinture à l'eau, un vernis de bitume ou une résine époxydique. Cette pulvérisation peut en particulier être réalisée au moyen d'un pistolet à peinture, fonctionnant sans air ou à l'air comprimé.

Pour l'essentiel, ce revêtement agit de la manière suivante.

La couche de zinc est dite "sacrificielle" par rapport à la fonte ; en effet, elle peut se consommer progressivement par oxydation sous l'effet de la pile électrochimique formée par la fonte, le zinc et le sol, pour protéger la fonte sous-jacente ou mise à nu au niveau de défauts ou de blessures du revêtement, par formation d'une couche protectrice de produits de corrosion, qui forment des précipités stables dans le milieu où ils ont pris naissance.

Les produits de corrosion colmatent et cicatrisent lesdites blessures, mais si le zinc vient à être épuisé, cette couche se détruit progressivement au cours du temps sans se renouveler, et la fonte n'est plus protégée. Or, un facteur essentiel conduisant à l'épuisement du zinc est l'auto-corrosion du zinc, qui consomme ce métal.

La seconde couche d'alliage zinc/aluminium protège la couche de zinc de ce phénomène en étant elle-même le siège de l'auto-corrosion.

L'interaction entre la première couche de zinc et la deuxième couche d'alliage vient stabiliser chaque couche métallique pour former une couche protectrice à long terme.

Du fait de son dépôt par métallisation à l'arc, la couche d'alliage est constituée de gouttelettes solidifiées et est donc poreuse. Ces pores sont partiellement colmatés par l'apparition des précipités produits par la corrosion du zinc, la progression de l'électrolyte du sol vers la couche de zinc pur étant ainsi freinée dans la couche d'alliage. En outre, la porosité de cette couche d'alliage favorise le bon accrochage de la couche bouche-pores.

Il est à noter à ce sujet que la migration des produits de corrosion de la première couche de zinc dans la deuxième couche d'alliage permet de colmater cette deuxième couche, réduisant ainsi la diffusion des espèces actives des sols vers la fonte. Par conséquent, la couche protectrice formée par la transformation contrôlée des différentes couches du revêtement offre une meilleure tenue à long terme que les couches de transformation obtenues à partir de l'un ou l'autre des constituants métalliques zinc/alliage du revêtement selon l'invention.

Le caractère poreux de la couche de zinc est lui aussi avantageux, car il augmente la surface active de zinc, et donc l'efficacité de la protection galvanique, et, de plus, il favorise le bon accrochage de la couche d'alliage.

La couche de zinc et la couche d'alliage zinc/aluminium ont donc pour l'essentiel des fonctions complémentaires, et on constate que leur superposition dans des quantités respectives de préférence d'au moins 200 g/m² et 150 g/m² protège efficacement la fonte contre la corrosion par les sols.

La couche bouche-pores permet principalement de ralentir l'auto-corrosion du zinc, et par conséquent de favoriser la constitution d'une couche compacte et dense de produits de corrosion du zinc, afin de maintenir leur effet protecteur. L'épaisseur du bouche-pores doit être suffisante pour assurer un frein efficace à l'auto-corrosion du zinc, mais suffisamment faible pour permettre un bon fonctionnement de la protection galvanique et la constitution des produits de corrosion.

De plus, une épaisseur trop importante du bouche-pores conduirait au piégeage d'eau sous lui et à la formation de cloques.

On a ainsi déterminé que l'épaisseur du bouche-pores devait être comprise entre 80 et 150 µm.

## Revendications

1. Elément de tuyauterie à base de fer, notamment en fonte, notamment pour canalisation enterrée, pourvu d'un revêtement extérieur comprenant
une première couche de zinc, caractérisé en ce qu'il comprend en outre sur cette première couche,
- une deuxième couche, poreuse, d'alliage zinc/aluminium contenant 5 à 55 % d'aluminium ; et sur cette deuxième couche,
- une troisième couche, poreuse, dite bouche-pores, comprenant un liant organique, notamment une peinture à l'eau, un vernis de bitume ou une résine époxydique.

2. Elément de tuyauterie selon la revendication 1, caractérisé en ce que la première couche est poreuse.

3. Elément de tuyauterie selon la revendication 1 ou 2, caractérisé en ce que la couche de zinc est prévue dans une quantité d'au moins 130 g/m², notamment d'au moins 200 g/m².

4. Elément de tuyauterie selon l'une quelconque des revendications 1 à 3, caractérisé en ce que la couche d'alliage est prévue dans une quantité d'au moins 130 g/m², notamment d'au moins 150 g/m².

5. Elément de tuyauterie selon l'une quelconque des revendications 1 à 4, caractérisé en ce que la couche bouche-pores a une épaisseur comprise entre 80 et 150 µm.

6. Canalisation, notamment enterrée, constituée d'éléments de tuyauterie selon l'une quelconque des revendications 1 à 5.

7. Procédé de réalisation de la protection d'un élément de tuyauterie à base de fer, notamment en fonte, contre la corrosion, notamment par les sols, comprenant l'étape suivante :
(a) dépôt, notamment par métallisation à l'arc, d'une première couche de zinc, caractérisé en ce qu'il comporte en outre les étapes suivantes
(b) dépôt par métallisation à l'arc d'une deuxième couche d'alliage zinc/aluminium, contenant 5 à 55 % d'aluminium, puis
(c) dépôt d'une troisième couche, poreuse, dite bouche-pores, comprenant un liant organique, notamment une peinture à l'eau, un vernis de bitume ou une résine époxydique.

8. Procédé suivant la revendication 7, caractérisé en ce qu'on dépose la couche de zinc dans une quantité d'au moins 130 g/m², notamment d'au moins 200 g/m².

9. Procédé suivant la revendication 7 ou 8, caractérisé en ce qu'on dépose la couche d'alliage dans une quantité d'au moins 130 g/m², notamment d'au moins 150 g/m².

10. Procédé suivant l'une quelconque des revendications 7 à 9, caractérisé en ce qu'on dépose la troisième couche par pulvérisation, notamment sous une épaisseur comprise entre 80 et 150 µm.

## Patentansprüche

1. Rohrelement auf Eisenbasis, insbesondere aus Gußeisen, vor allem für unterirdisch verlegte Rohrleitungen, das mit einer äußeren Auskleidung versehen ist, welche eine erste Schicht aus Zink umfaßt, und dadurch gekennzeichnet ist, daß es darüber hinaus auf dieser ersten Schicht
- eine zweite, poröse Schicht aus einer Zink/Aluminium-Legierung, die 5 bis 55 % Aluminium enthält; und auf dieser zweiten Schicht
- eine dritte, poröse, sogenannte porenverschließende Schicht aufweist, die einen organischen Binder,
insbesondere eine Wasserfarbe, einen Bitumenlack oder ein Epoxiharz, umfaßt.

2. Rohrelement nach Anspruch 1, dadurch gekennzeichnet, daß die erste Schicht porös ist.

3. Rohrelement nach Anspruch 1 oder 2, dadurch gekennzeichnet, daß die Zinkschicht in einer Menge von mindestens 130 g/m², insbesondere von mindestens 200 g/m², vorgesehen ist.

4. Rohrelement nach einem der Ansprüche 1 bis 3, dadurch gekennzeichnet, daß die Legierungsschicht in einer Menge von mindestens 130 g/m², insbesondere von mindestens 150 g/m², vorgesehen ist.

5. Rohrelement nach einem der Ansprüche 1 bis 4, dadurch gekennzeichnet, daß die Dicke der porenverschließenden Schicht zwischen 80 und 150 µm beträgt.

6. Rohrleitung, insbesondere eine unterirdisch verlegte Rohrleitung, die aus Rohrelementen nach einem der Ansprüche 1 bis 5 besteht.

7. Verfahren zur Herstellung des Schutzes eines Rohrelementes auf Eisenbasis, insbesondere aus Gußeisen, gegen Korrosion, vor allem gegen Korrosion durch die Böden, das den Schritt (a) des Aufbringens, insbesondere durch Lichtbogen-Metallisierung, einer ersten Schicht aus Zink aufweist und dadurch gekennzeichnet ist, daß es darüber hinaus die folgenden Schritte umfaßt:
(b) Aufbringen durch Lichtbogen-Metallisierung einer zweiten Schicht aus einer Zink/Aluminium-Legierung, die 5 bis 55 % Aluminium enthält; dann
(c) Aufbringen einer dritten, porösen, sogenannten porenverschließenden Schicht, die einen organischen Binder, insbesondere eine Wasserfarbe, einen Bitumenlack oder ein Epoxiharz, umfaßt.

8. Verfahren nach Anspruch 7, dadurch gekennzeichnet, daß die Zinkschicht in einer Menge von mindestens 130 g/m², insbesondere von mindestens 200 g/m², aufgebracht wird.

9. Verfahren nach Anspruch 7 oder 8, dadurch gekennzeichnet, daß die Legierungsschicht in einer Menge von mindestens 130 g/m², insbesondere von mindestens 150 g/m², aufgebracht wird.

10. Verfahren nach einem der Ansprüche 7 bis 9, dadurch gekennzeichnet, daß die dritte Schicht durch Aufspritzen, insbesondere mit einer Dicke, die zwischen 80 und 150 µm beträgt, aufgebracht wird.

## Claims

1. Iron-based, especially cast-iron, pipework element, especially for a buried pipeline, provided with an external coating comprising
a first layer of zinc, characterized in that it further comprises, on this first layer,
- a second, porous, layer of zinc/aluminium alloy containing from 5 to 55% of aluminium; and on this second layer,
- a third, porous, layer, called the pore-blocking layer, comprising an organic binder, especially a water-based paint, a bitumen varnish or an epoxy resin.

2. Pipework element according to Claim 1, characterized in that the first layer is porous.

3. Pipework element according to Claim 1 or 2, characterized in that the layer of zinc is provided in a quantity of at least 130 g/m², especially at least 200 g/m².

4. Pipework element according to any one of Claims 1 to 3, characterized in that the layer of alloy is provided in a quantity of at least 130 g/m², especially at least 150 g/m².

5. Pipework element according to any one of Claims 1 to 4, characterized in that the pore-blocking layer has a thickness of between 80 and 150 µm.

6. Pipeline, especially a buried one, consisting of pipework elements according to any one of Claims 1 to 5.

7. Method of realizing the protection of an iron-based, especially cast-iron, pipework element from corrosion, especially soil corrosion, comprising the following stage:
(a) deposition, especially by arc metallization, of a first layer of zinc, characterized in that it further includes the following stages
(b) deposition by arc metallization of a second layer of zinc/aluminium alloy containing from 5 to 55% of aluminium, and then
(c) deposition of a third, porous, layer, called the pore-blocking layer, comprising an organic binder, especially a water-based paint, a bitumen varnish or an epoxy resin.

8. Method according to Claim 7, characterized in that the layer of zinc is deposited in a quantity of at least 130 g/m², especially at least 200 g/m².

9. Method according to Claim 7 or 8, characterized in that the layer of alloy is deposited in a quantity of at least 130 g/m², especially at least 150 g/m².

10. Method according to any one of Claims 7 to 9, characterized in that the third layer is deposited by spraying, especially to a thickness of between 80 and 150 µm.
